# EUROPEAN PATENT SPECIFICATION

(11) **EP 1 654 922 B1**
(45) Date of publication and mention of the grant of the patent: **27.06.2007**
(21) Application number: 05100808.4
(22) Date of filing: 04.02.2005
(51) Int. Cl.: A01D 46/26

(54) **Shaking device for harvesting fruits such as olives and the like**
Schüttelvorrichtung für das Ernten von Früchten wie Oliven und dergleichen
Appareil de secouage pour la récolte de fruits tels que les olives et d'autres fruits semblables

(30) Priority: 05.11.2004 IT RM20040549
(43) Date of publication of application: 10.05.2006
(73) Proprietor: Cecchi, Marco, 71100 Foggia (IT); Cecchi, Daniela, 71100 Foggia (IT); Cecchi, Sabrina, 71100 Foggia FG (IT)
(72) Inventor: Cecchi, Marco, 71100 Foggia (IT); Cecchi, Daniela, 71100 Foggia (IT); Cecchi, Sabrina, 71100 Foggia FG (IT)
(74) Representative: Papa, Elisabetta

(56) References cited:
- WO-A-01/08466
- US-A- 3 478 501
- US-A- 3 601 962
- US-A- 3 813 860
- US-A1- 2003 046 916
- US-B1- 6 178 730

## Description

The present invention refers to a shaking device for harvesting fruits such as olives and the like from branches of the producing plants (see e.g. US-A-3 813 860).

This type of machine finds application in agriculture, generally in all those crops entailing a step of harvesting with the detachment of fruits from the thick of the foliage of the producing plants, and particularly in the olive-growing field.

The ever more pressing need to reconcile higher productivity with reduced harvesting times, as well as the shortage of labour traditionally employed in the manual stripping, have brought about the progressive mechanization of the harvesting processes of fruits such as olives, hazelnuts and the like and the abandoning of the customary beating with poles.

Mechanical harvesting devices are known which are apt to spare agricultural operators a demanding energy expenditure and an overly slow progress in carrying out the fruit-detaching steps.

According to the type of the machines employed in the known art, the modes with which the detachment of the fruits from the peduncle is attained vary.

Presently, there are used "tearing" harvesting means, such as the combs, operating directly on the fruit, or "percussion" harvesting machines, e.g. of the hydraulic type, which transfer vibrations onto the trunk or the individual branches, applying stresses that cause fruits to detach from the peduncle owing to the shaking sustained.

However, such machineries entail the drawback of being scarcely productive, incompletely harvesting the quantity of fruits available on the branches. Moreover, they are potentially harmful to the integrity of the foliage, of the trunks and of the roots of the producing plants.

Shakers of modem conception are commercially available as well, which act on the branches and are set as an alternative to said harvesting modes, using rotating arms that, besides shaking the foliage, have a combined racking/beating effect.

However, their effectiveness is reduced by the fact that the foliage penetration capability of the rotating arms does not suffice to completely harvest the fruits. In particular, generally a considerable quantity of fruits remains not detached in the thick of the foliage, at its innermost portion; therefore, actually the harvesting is carried out completely in the peripheral portion only. This is due to the fact that the rods making up each rotating arm necessarily have a limited length, in order to avoid the insurgence of elastic instability phenomena that would generate uncontrolled vibrations and induce permanent deformations thereon, up to causing the loss of functionality and the possible final breakage thereof. Moreover, any "stroke of lash" deriving from said phenomena would damage the producing plants, breaking off the branches and often deteriorating the fruits themselves.

Hence, the technical problem underlying the present invention is to provide a shaker apt to overcome the drawbacks hereto-mentioned with reference to the known art.

Such a problem is solved by a shaker for harvesting fruits such as olives and the like from plants according to claim 1.

The introduction of the stiffening means according to the present invention allows a substantial overall increase of the length of the shaking elements with respect to the maximum dimensions attainable by the rods making up the rotating arms of the known shakers, eliminating the risk of mechanical instabilities. Thus, it is advantageously attained a greater foliage penetration depth of the effective portion of each shaking element, with an entailed higher yield of the harvesting operations.

As mentioned above, such a result is attained without compromising the elastic stability of the effective shaking portions of the shaking elements, whose maximum length is kept shorter than the critical one, at which the "strokes of lash" applied would increase in frequency until becoming unstable or anyhow damaging plants and fruits to be harvested. This is attained also by virtue of the fact that said stiffening means is applied at the actuating portions of the shaking elements, i.e. at the portions connected to the driving means. Thus stiffened, the actuating portions may be properly lengthened and carry out the additional function of extensions.

Thus, via the overall and structurally compatible increase of the length of the shaking elements, it is allowed an improved skill in the carrying out of the harvesting steps, with an entailed yield increase.

Advantageously, the shaker according to the present invention further allows, by virtue of its effectiveness, the abatement of the times and concomitantly of the harvesting costs.

In addition, it allows to attain a quality product concomitantly respecting the integrity of the plants, given the non-traumatic harvesting modes. In fact, by virtue of the use of the shaker according to the present invention, the effects injurious to the foliage and the fruits of the producing plants and the falling of twigs are minimized.

A further advantage of the shaker according to the present invention lies in that it integrates sturdiness, lightness and manoeuvrability.

Moreover, advantageously there can be provided means for adjusting the tilt and the position of the main body of the shaker itself. In this way, it is ensured a ready adjustment to any operative condition and to any morphology of the harvesting ground. The shaker according to the present invention provides the option of a variable-tilt mount for connecting an extension rod. Advantageously, such an extension rod could be telescopic so that the shaker may be operated at variable heights according to needs.

Further advantages, features and the modes of employ of the present invention will be made apparent in the following detailed description of a preferred embodiment thereof, given by way of a non-limiting example.

Reference will be made to the figures of the annexed drawings, wherein:
- Figure 1 is a partially sectional side view of a preferred embodiment of the shaker according to the present invention;
- Figure 2 is a front view of the shaker of Figure 1;
- Figure 3 is a rear view of the shaker of Figure 1;
- Figure 4A is an elevational side perspective view illustrating the connection of a telescopic extension rod to a variable-tilt mount of the shaker of Figure 1;
- Figure 4B is an elevational side perspective view depicting the shaker of Figure 1 mounted onto the extension rod of Figure 4A and connected to a portable rechargeable power unit;
- Figure 5 illustrates an operator using the shaker of Figure 1, in the configuration of Figure 4B, on a plant;
- Figures 6A and 6B show a front perspective view and a side view, respectively, of a second preferred embodiment of the invention.

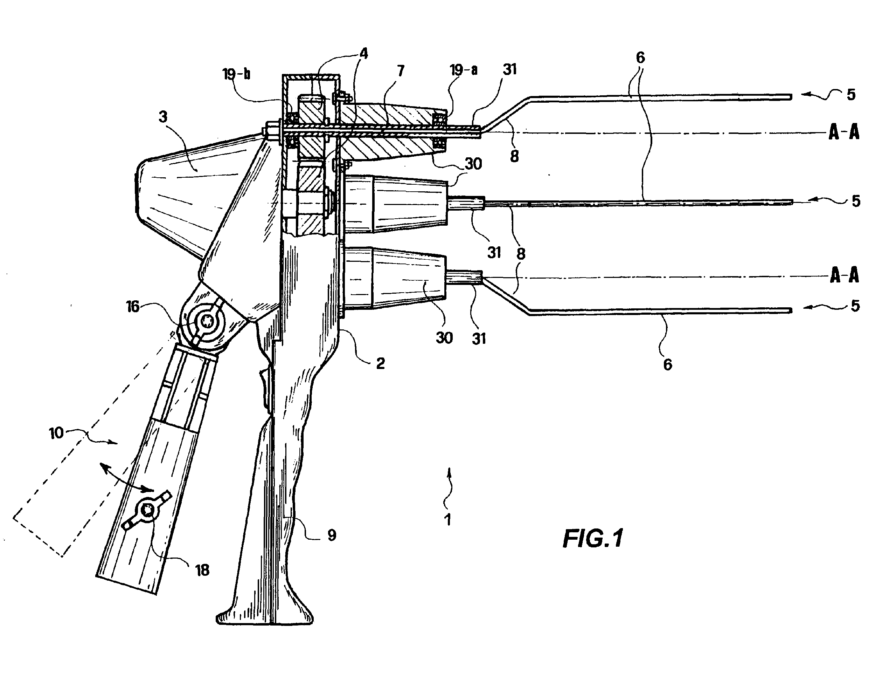

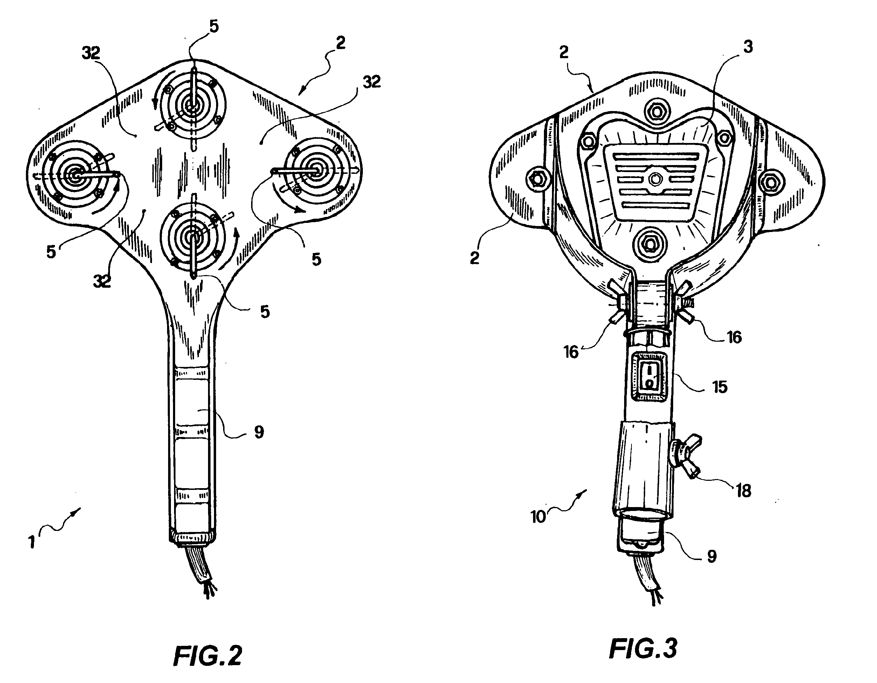

With reference to Figures 1 to 3, hereinafter it will be described a shaking device, generally indicated by 1, for harvesting fruits such as olives, hazelnuts and the like from the producing plants according to a preferred embodiment of the invention.

The shaker 1 has a main body comprising a rear cover 3, inside which it is housed rotating driving means, preferably electrical, apt to develop a rotary motion, and a front case 2. Inside the latter it is housed means 4 for transmitting the rotary motion generated by the driving means to shaking elements 5 frontally projecting from the case 2 itself.

Said shaking elements 5 are substantially rod-shaped and rotate about respective axes of rotation A-A substantially parallel therebetween.

Each of the shaking elements 5 comprises a respective front effective shaking portion 6, eccentric with respect to the axis of rotation A-A, and an actuating portion 7, integral to the shaking portion 6 and cooperating with the transmission means 4, which is substantially aligned to said axis A-A.

The two portions 6 and 7 are connected by a tilted rigid connecting section 8, integral therewith. In the specific case, such a rigid connecting section 8 between the actuating portion 7 and the effective shaking portion 6 is represented by an oblique elbow.

In the embodiment described herein the motion transmission means is implemented by gears, they are also indicated by 4, each of which, as mentioned above, cooperates with the actuating portion 7 of a respective shaking element 5 so as to drag it in rotation.

More specifically, the combination of said gears 4 forms a train of toothed gears that are inputted, via a shaft, the rotary motion generated by the driving means, e.g. by an electric motor, and mesh so as to synchronize the rotation of the shaking elements 5.

The engineering of said wheelwork, via the implementation of suitable clutches of said gears 4, could provide the option of selectively inducing, according to contingent needs, a rotation of said shaking elements 5 in a concordant or mutually discordant verse.

Moreover, a variant embodiment provides that the shaking elements 5 may be selectively activated individually or in sets by the operator, and therefore not necessarily all concomitantly set in rotation.

In addition, the shaker 1 according to the present invention may be equipped with means for adjusting the speed of rotation of the shaking elements 5 so that the operator may selectively set a given speed for all or each of the latter, for example with a speed commutator whose functionalities can be activated by acting on a multiposition switch.

Onto the main body of the shaker 1 it is obtained a handgrip 9, preferably ergonomic, for the direct control of the shaker 1 by the operator, and optionally for shaking from a position close to the producing plant.

The driving means is operable by means of a conventional switch 15, optionally of the kind that has to be held pressed for a continual operation of the means itself

According to the invention, the shaker 1 comprises stiffening means of the shaking elements 5, arranged at the actuating portion 7 thereof.

In the present embodiment, such stiffening means comprises, for each actuating portion 7 of the shaking elements 5, a first stiffening element 30 integral to the case 2 and a second stiffening element 31 rotatable integrally to the actuating portion 7 itself. Both said elements are circumscribed to the respective actuating portion 7, and the second element 31 is arranged internally to the first element 30.

In particular, the first stiffening elements consist in sleeves 30, projecting from the case 2 of the main body and made integral thereto, e.g., by conventional disassemblable connecting means.

In the present embodiment, the sleeves 30 are substantially frustoconical bodies and extend for nearly the entire length of the respective actuating portions 7 projecting from the case 2. Of course, variant embodiments could provide a different configuration of said sleeves 30, which could also be, e.g., cylindrical.

The second stiffening elements 31 consist in tubular elements, each wrapping and fixed to a respective actuating portion 7.

In this case, it is the tubular elements 31 themselves that are brought in rotation by a relevant gear 4 engaged thereon, dragging the respective actuating portions 7.

In the preferred embodiment of the shaker 1 considered hereto, an additional stiffening action is carried out, for each shaking element 5, by a pair of bearings 19A and 19B apt to rotatably connect the relevant actuating portion 7 or the respective element 31 to the case 2 of the main body.

In particular, the bearings 19A and 19B are arranged each at or near to a respective end of said actuating portion 7 or of the respective element 31.

In the present embodiment, the bearings 19A have an external ring integral to the case 2 and an internal ring integral to the elements 31.

In the same way, the sleeves 30 engage, by resting onto the external ring of the bearings 19A, about a respective tubular element 31.

The bearings 19B, internal to the case 2, may be of the axial kind and have an external ring fixed to the case 2 and an internal ring fixed to the respective element 31.

It will now be better understood that by virtue of the action of stiffening and of structural tightness exerted by said stiffening means and by possible combinations thereof, it becomes possible to increase the length of the actuating portions 7 of the shaking elements 5 with respect to the known devices. In particular, it is possible to adopt a constructive mode in which the part of the actuating portions 7 of the shaking elements 5 projecting from the case 2 of the machine (rigid connecting sections 8 included) is characterized by a greater length, with respect to that generally allowed for structural reasons in the known machines. Accordingly, the overall length of the shaking elements 5 is increased with respect to the known machines. There ensues an increase of the penetration depth of the respective effective shaking portions 6.

With regard to the embodiment given here by way of example and depicted in Figures 1 to 3, the shaker 1 according to the present invention comprises four shaking elements 5, each of which is arranged at a respective vertex of a quadrilateral.

Hence, the actuating portions 7, and accordingly the elements 30 and 31 circumscribed thereto, are arranged so as to define a central housing room 32 apt to house the branches already shaken, further assisting the capability of the shaking elements 5 to penetrate in-depth the foliage of the producing plants.

Said frustoconical configuration of the sleeves 30 fosters the housing of the branches already shaken in said housing room 32, since the taper constitues a raiser for the sliding and the allocation of said branches.

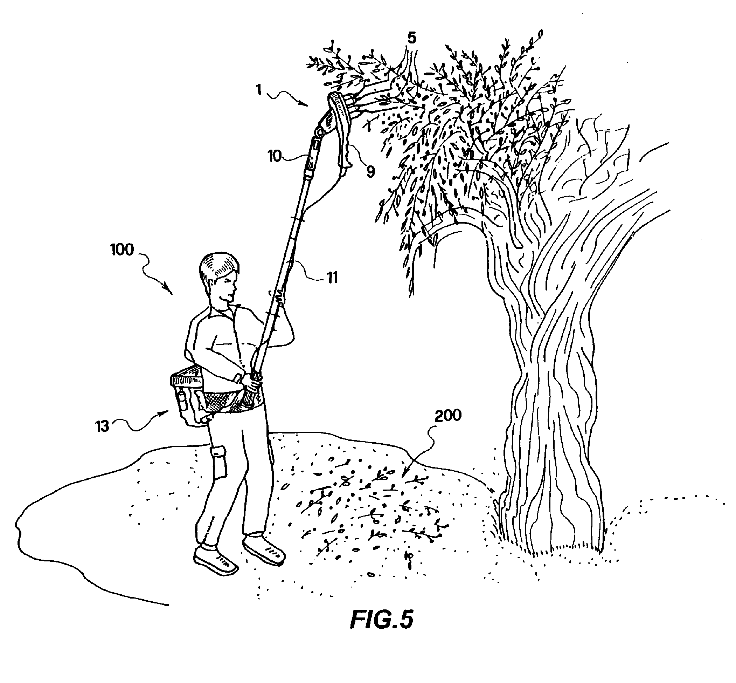

With reference also to Figure 5, the shaking elements 5, by describing circumferences about a respective axis A-A in their rotation, produce a combined effect causing the falling of the fruits 200 from the foliage, for example on a system of nets prearranged beforehand onto the ground about the producing plants.

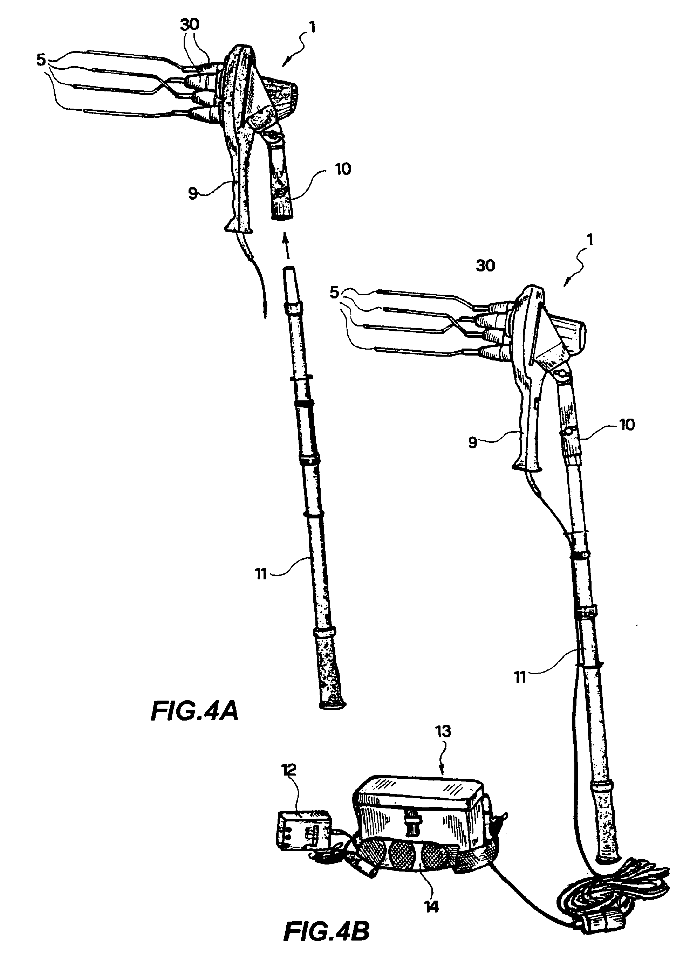

For an improved manoeuvrability of the shaker 1 even from a non-close position, onto the main body of the shaker 1 it is preferably obtained connecting means 10 for the connection to an extension rod shown in Figures 4A and 4B and indicated by 11.

Preferably, said connecting means 10 has a variable tilt and, in the specific embodiment of the shaker 1 depicted in the figures, it comprises a hollow mount, or coupling, apt to receive one end of said extension rod 11.

The hollow mount is equipped with means 16 for the rapid adjustment of the tilt, for example of the screw lock kind.

The connection of the extension rod 11 to the mount 10 is preferably rigid and for example implemented via a rapid tightening device 18.

According to a preferred embodiments and with reference to Figures 4A and 4B, the rod 11 is tubular and telescopic, thereby allowing a ready adjustment with regard to the height of the plant being harvested.

Said driving means is powered by a power unit 13, for example of the dry type, preferably rechargeable via a suitable recharger 12 and relevant means for connecting to the supply mains; such a unit is shown in Figure 4B.

With reference to Figures 4B and 5, in view of the need for a wide margin of manoeuvre onto the working ground for the shaker 1, preferably said power unit 13 is portable and it can be housed in a bag. The operator, indicated by 100 in Figure 5, may wear on said bag, for example securing it round the waist by virtue of an adjustable belt 14 or to the back via suitable shoulder straps.

It will be understood that the present invention is susceptible of several embodiments alternative to the hereto-described one, some of which will briefly be illustrated hereinafter with reference to the sole aspects differentiating them from the hereto-considered first embodiment.

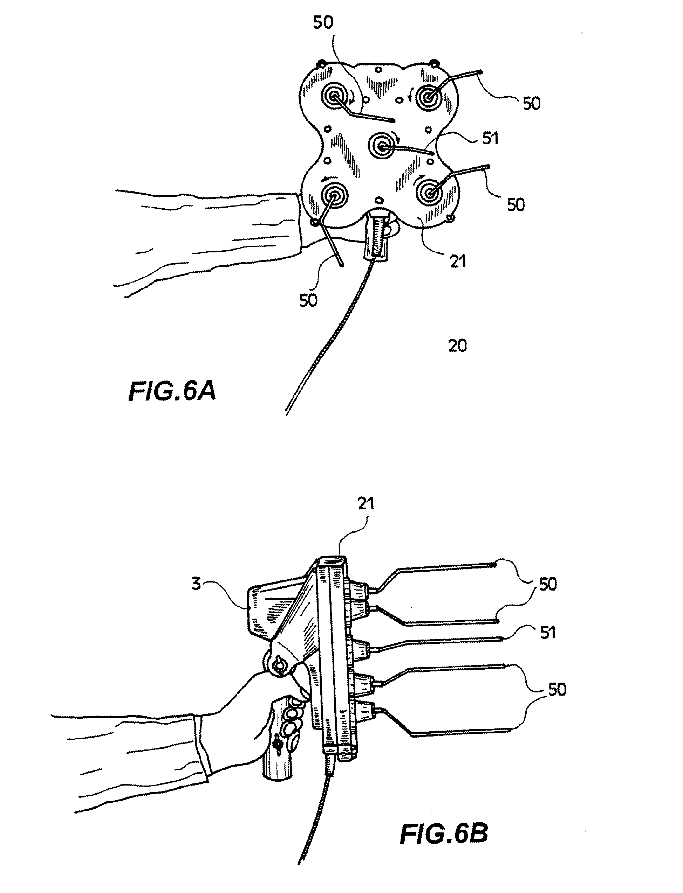

With reference to Figures 6A and 6B, a shaking device according to another preferred embodiment of the invention is generally indicated by 20. The device 20 comprises a main body formed in this case as well by a rear cover 3, inside which there is housed rotating driving means analogous to the hereto-described ones, and by a front case, in this case indicated by 21, which is shaped in a manner such as to receive five shaking elements. Four of the latter, indicated by 50, are arranged at the vertexes of a quadrilateral, whereas the fifth element, indicated by 51, is arranged in a position substantially centred with respect to the formers. The overall arrangement of the device 20 is such that pairs of adjacent shaking elements 50 rotate in the opposite verse, as exemplarily indicated by the arrows of Figure 6A. Moreover, the central shaking element 51 rotates at a speed substantially lower with respect to the lateral elements 50.

The hereto-described arrangement and configuration cause the shaking element 51 to act as conveying element, i.e. to convey by its rotary motion the branches and twigs toward the lateral elements 50. Then, the latter act as the actual beating or shaking elements.

Variant embodiments may envisage a different number and configuration of the two kinds of shaking elements mentioned above.

In particular, for instance it is possible to provide plural concentric rings of elements, e.g. adding an external ring of conveying elements and a further ring, circumscribed thereto, of beating elements, and so on, to said basic 5-element configuration.

Moreover, it is also possible to arrange the conveying element or elements externally to the beating ones.

Such an association of one or more shaking conveying elements with one or more beating elements circumscribed to or inscribed in the former makes fruit harvesting less traumatic for all plant components, concomitantly ensuring a high productivity of the harvesting process and reduced times for its completion.

In particular, it will be appreciated that, by virtue of the limited number of revolutions of the conveying element or elements with respect to the beating ones, the branches and twigs are gently conveyed toward the actual shaking elements, reducing the risk of breaking said branches and twigs, knocking leaves down and/or damaging the fruits.

These advantages are important also because the described variant embodiment greatly reduces the risk of falling of the so-called "olive-blossom" or "eyespots", i.e. the bud for the production of the years to come.

To the above described shaker for harvesting fruits from producing plants, a person skilled in the art, in order to satisfy further and contingent needs, may effect several further modifications and variants, all however falling within the protective scope of the present invention, as defined by the appended claims.

## Claims

1. A shaking device (1; 20) for harvesting fruits (200) such as olives, hazelnuts and the like from the relevant plants, comprising:
- a main body (2, 3; 21, 3);
- rotating driving means; and
- a plurality of shaking elements (5; 50, 51) projecting from said main body (2, 3; 21, 3), said shaking elements (5; 50, 51) being substantially rod-shaped and rotating about respective axes of rotation (A-A) substantially parallel therebetween by action of said driving means, wherein each of said shaking elements (5; 50, 51) in turn has:
■ an effective shaking portion (6), substantially eccentric with respect to the respective axis of rotation (A-A); and
■ an actuating portion (7) that can be actuated by said driving means, which is substantially centred with respect to said respective axis of rotation (A-A) and is apt to increase the penetration depth of the shaking element (5) itself,
**characterised in that** said device (1) further comprises stiffening means (30, 31, 19A, 19B) arranged at said actuating portion (7) of each shaking element (5) and apt to prevent elastic deformations of said shaking elements (5) during their rotary motion.

2. The device (1; 20) according to claim 1, comprising motion transmission means (4) interposed between said driving means and said actuating portions (7) of said shaking elements (5; 50, 51).

3. The device (1; 20) according to the preceding claim, wherein said transmission means (4) is housed in said main body (2, 3; 21, 3).

4. The device (1; 20) according to claim 2 or 3, wherein said transmission means comprises gears (4), each associated with a respective actuating portion (7) so as to drag in rotation a respective shaking element (5; 50, 51).

5. The device (1; 20) according to the preceding claim, wherein said gears (4) form a system of toothed gears meshing so as to synchronize the rotation of said shaking elements (5; 50, 51).

6. The device (1; 20) according to any one of the preceding claims, wherein the overall arrangement is such that said shaking elements (5) are apt to rotate in a concordant verse.

7. The device (1; 20) according to any one of the preceding claims, wherein the overall arrangement is such that said shaking elements (5) are apt to rotate in a mutually discordant verse.

8. The device (1; 20) according to any one of the preceding claims, wherein said shaking elements (5; 50, 51) can be selectively activated by an operator (100).

9. The device (1; 20) according to any one of the preceding claims, comprising means for adjusting the speed of rotation of said shaking elements (5; 50, 51).

10. The device (1; 20) according to any one of the preceding claims, wherein said driving means is electrical.

11. The device (1; 20) according to any one of the preceding claims, wherein said driving means is housed in said main body (2, 3; 21, 3).

12. The device (1; 20) according to any one of the preceding claims, comprising a handgrip (9) obtained on said main body (2, 3; 21, 3).

13. The device (1; 20) according to any one of the preceding claims, comprising connecting means (10) for the connection to an extension rod (11), arranged at said main body (2, 3; 21, 3).

14. The device (1; 20) according to the preceding claim, wherein said connecting means (10) has a variable tilt.

15. The device (1; 20) according to claim 13 or 14, wherein said connecting means comprises a hollow mount (10), apt to receive one end of said extension rod (11).

16. The device (1; 20) according to any one of the claims 13 to 15, comprising said extension rod (11), wherein said rod (11) is telescopic.

17. The device (1; 20) according to any one of the preceding claims, comprising a rechargeable power unit (13) of said rotating driving means.

18. The device (1) according to any one of the preceding claims, comprising a portable power unit (13) for said rotating driving means.

19. The device (1; 20) according to the preceding claim, wherein said power unit (13) can be housed in a bag apt to be worn by an operator (100).

20. The device (1; 20) according to any one of the preceding claims, wherein said stiffening means comprises, for each actuating portion (7) of said shaking elements (5; 50, 51), at least one stiffening element (30, 31) circumscribed thereto.

21. The device (1; 20) according to any one of the preceding claims, wherein said stiffening means comprises, for each actuating portion (7) of said shaking elements (5; 50, 51), at least one stiffening element (30) fixed with said main body (2, 3; 21, 3).

22. The device (1; 20) according to the preceding claim, wherein said stiffening element comprises a sleeve (30) projecting from the main body (2, 3; 21, 3).

23. The device (1; 20) according to the preceding claim, wherein said sleeve (30) is substantially cylindrical.

24. The device (1; 20) according to claim 22, wherein said sleeve (30) is substantially frustoconical.

25. The device (1; 20) according to any one of the preceding claims, wherein said stiffening means comprises, for each actuating portion (7) of said shaking elements (5; 50, 51), at least one stiffening element (31) rotatable integrally to the actuating portion (7) itself.

26. The device (1; 20) according to the preceding claim and according to any one of the claims 21 to 24, wherein said stiffening means comprises, for each actuating portion (7) of said shaking elements (5; 50, 51), at least one first stiffening element (30) fixed with said main body (2, 3; 21, 3) and at least one second stiffening element (31) rotatable integrally to the actuating portion (7) itself, said first element (30) being circumscribed to said second element (31).

27. The device (1; 20) according to claim 25 or 26, wherein said rotatable stiffening element comprises a tubular sleeve (31) wrapping the respective actuating portion (7).

28. The device (1; 20) according to any one of the preceding claims, wherein said actuating portions (7) are arranged so as to define a housing room (32) for the branches already shaken.

29. The device (1; 20) according to any one of the preceding claims, wherein said stiffening means comprises, for each shaking element (5; 50, 51), a pair of bearings (19A, 19B); rotatably connecting each of said actuating portions (7) to said main body (2, 3; 21, 3), arranged each substantially at a respective end of said actuating portion (7).

30. The device (1; 20) according to any one of the preceding claims, comprising four shaking elements (5; 50).

31. The device (1; 20) according to any one of the preceding claims, wherein each of said shaking elements (5; 50) is arranged at a respective vertex of a polygon.

32. The device (20) according to any one of the preceding claims, wherein said plurality of shaking elements comprises at least one conveying element (51) and at least one beating element (50), the former having a speed of rotation lower than the latter, so that said conveying element (51) be apt to convey the fruit-bearing foliage toward said beating element (50).

33. The device (20) according to the preceding claim, comprising a plurality of beating elements (50) circumscribed to said at least one conveying element (51).

34. The device (20) according to the preceding claim, comprising four beating elements (50) circumscribed to said at least one conveying element (51).

35. The device (20) according to claim 32, comprising a plurality of conveying elements (51) circumscribed to said at least one beating element (50).

36. The device (20) according to the preceding claim, comprising four conveying elements (51) circumscribed to said at least one beating element (50).

37. The device (20) according to any one of the claims 32 to 36, comprising a plurality of rings of beating elements (50) circumscribed to respective elements or rings of conveying elements (51).

38. The device (20) according to any one of the claims 32 to 37, comprising a plurality of rings of conveying elements (51) circumscribed to respective elements or rings of beating elements (50).

39. The device (20) according to any one of the claims 32 to 38, wherein said beating element or elements (50) rotate in a sense opposite to a respective adjacent conveying element or elements (51).

## Patentansprüche

1. Schüttelvorrichtung (1; 20) zum Ernten von Früchten (200) wie Oliven, Haselnüsse und dgl. von den betreffenden Pflanzen, mit:
- einem Hauptgehäuse (2, 3; 21, 3);
- einer Drehantriebseinrichtung; und
- mehreren Schüttelelementen (5; 50, 51), die von dem Hauptgehäuse (2, 3; 21, 3) vorstehen, wobei die Schüttelelemente (5; 50, 51) im Wesentlichen stabförmig sind und sich aufgrund der Antriebseinrichtung um Drehachsen (A-A) drehen, die im Wesentlichen parallel zueinander sind, wobei jedes der Schüttelelemente (5; 50, 51) seinerseits hat:
□ einen wirksamen Schüttelteil (6), der in Bezug auf die Drehachse (A-A) im Wesentlichen exzentrisch ist; und
□ einen Betätigungsteil (7), der durch die Antriebseinrichtung betätigt werden kann, in Bezug auf die betreffende Drehachse (A-A) im Wesentlichen zentriert ist und dafür ausgebildet ist, die Eindringtiefe des Schüttelelements (5) selbst zu vergrößern,
**dadurch gekennzeichnet, dass** die Vorrichtung (1) weiter Versteifungseinrichtungen (30, 31, 19A, 19B) aufweist, die an dem Betätigungsteil (7) jedes Schüttelelements (5) angeordnet und in der Lage sind, elastische Deformationen der Schüttelelemente (5) während deren Drehbewegung zu verhindern.

2. Vorrichtung (1; 20) nach Anspruch 1, mit einer Bewegungsübertragungseinrichtung (4), die zwischen der Antriebseinrichtung und den Betätigungsteilen (7) der Schüttelelemente (5; 50, 51) angeordnet ist.

3. Vorrichtung (1; 20) nach dem vorhergehenden Anspruch, wobei die Übertragungseinrichtung (4) in dem Hauptgehäuse (2, 3; 21, 3) untergebracht ist.

4. Vorrichtung (1; 20) nach Anspruch 2 oder 3, wobei die Übertragungseinrichtung Räder (4) aufweist, die jeweils einem entsprechenden Betätigungsteil (7) zugeordnet sind, um so ein Schüttelelement (5; 50, 51) in Drehung zu versetzen.

5. Vorrichtung (1; 20) nach dem vorhergehenden Anspruch, wobei die Räder (4) ein System von kämmenden Zahnrädern bilden, um so die Drehung der Schüttelelemente (5; 50, 51) zu synchronisieren.

6. Vorrichtung (1; 20) nach einem der vorhergehenden Ansprüche, wobei die Gesamtanordnung so getroffen ist, dass die Schüttelelemente (5) in der Lage sind, sich auf konkordante Weise zu drehen.

7. Vorrichtung (1; 20) nach einem der vorhergehenden Ansprüche, wobei die Gesamtanordnung so getroffen ist, dass die Schüttelelemente (5) in der Lage sind, sich gegenseitig auf diskordante Weise zu drehen.

8. Vorrichtung (1; 20) nach einem der vorhergehenden Ansprüche, wobei die Schüttelelemente (5; 50, 51) durch eine Bedienungsperson (100) wahlweise betätigt werden können.

9. Vorrichtung (1; 20) nach einem der vorhergehenden Ansprüche, mit einer Einrichtung zum Einstellen der Drehgeschwindigkeit der Schüttelelemente (5; 50, 51).

10. Vorrichtung (1; 20) nach einem der vorhergehenden Ansprüche, wobei die Antriebseinrichtung elektrisch ist.

11. Vorrichtung (1; 20) nach einem der vorhergehenden Ansprüche, wobei die Antriebseinrichtung in dem Hauptgehäuse (2, 3; 21, 3) untergebracht ist.

12. Vorrichtung (1; 20) nach einem der vorhergehenden Ansprüche, mit einem Handgriff (9), der an dem Hauptgehäuse (2, 3; 21, 3) ausgebildet ist.

13. Vorrichtung (1; 20) nach einem der vorhergehenden Ansprüche, mit einer Verbindungseinrichtung (10) für die Verbindung mit einer Verlängerungsstange (11), die an dem Hauptgehäuse (2, 3; 21, 3) angeordnet ist.

14. Vorrichtung (1; 20) nach dem vorhergehenden Anspruch, wobei die Verbindungseinrichtung (10) eine variable Neigung hat.

15. Vorrichtung (1; 20) nach Anspruch 13 oder 14, wobei die Verbindungseinrichtung eine hohle Befestigung (10) aufweist, die in der Lage ist, ein Ende der Verlängerungsstange (11) aufzunehmen.

16. Vorrichtung (1; 20) nach einem der Ansprüche 13 bis 15, die die Verlängerungsstange (11) aufweist, wobei die Stange (11) teleskopisch ist.

17. Vorrichtung (1; 20) nach einem der vorhergehenden Ansprüche, mit einer wiederaufladbaren Stromversorgungseinheit (13) für die Drehantriebseinrichtung.

18. Vorrichtung (1) nach einem der vorhergehenden Ansprüche, mit einer tragbaren Stromversorgungseinheit (13) für die Drehantriebseinrichtung.

19. Vorrichtung (1; 20) nach dem vorhergehenden Anspruch, wobei die Stromversorgungseinheit (13) in einem Beutel untergebracht sein kann, der durch eine Bedienungsperson (100) getragen werden kann.

20. Vorrichtung (1; 20) nach einem der vorhergehenden Ansprüche, wobei die Versteifungseinrichtung für jeden Betätigungsteil (7) der Schüttelelemente (5; 50, 51) wenigstens ein Versteifungselement (30, 31) aufweist, das diesen umschließt.

21. Vorrichtung (1; 20) nach einem der vorhergehenden Ansprüche, wobei die Versteifungseinrichtung für jeden Betätigungsteil (7) der Schüttelelemente (5; 50, 51) wenigstens ein Versteifungselement (30) aufweist, das an dem Hauptgehäuse (2, 3; 21, 3) befestigt ist.

22. Vorrichtung (1; 20) nach dem vorhergehenden Anspruch, wobei das Versteifungselement eine Büchse (30) aufweist, die von dem Hauptgehäuse (2, 3; 21, 3) vorsteht.

23. Vorrichtung (1; 20) nach dem vorhergehenden Anspruch, wobei die Büchse (30) im Wesentlichen zylindrisch ist.

24. Vorrichtung (1; 20) nach Anspruch 22, wobei die Büchse (30) im Wesentlichen kegelstumpfförmig ist.

25. Vorrichtung (1; 20) nach einem der vorhergehenden Ansprüche, wobei die Versteifungseinrichtung für jeden Betätigungsteil (7) der Schüttelelemente (5; 50, 51) wenigstens ein Versteifungselement (31) aufweist, das integral mit dem Betätigungsteil (7) selbst drehbar ist.

26. Vorrichtung (1; 20) nach dem vorhergehenden Anspruch und nach einem der Ansprüche 21 bis 24, wobei die Versteifungseinrichtung für jeden Betätigungsteil (7) der Schüttelelemente (5; 50, 51) wenigstens ein erstes Versteifungselement (30) aufweist, das an dem Hauptgehäuse (2, 3; 21, 3) befestigt ist, und wenigstens ein zweites Versteifungselement (31), das integral mit dem Betätigungsteil (7) selbst drehbar ist, wobei das erste Element (30) das zweite Element (31) umschließt.

27. Vorrichtung (1; 20) nach Anspruch 25 oder 26, wobei das drehbare Versteifungselement eine rohrförmige Büchse (31) aufweist, die den Betätigungsteil (7) umgibt.

28. Vorrichtung (1; 20) nach einem der vorhergehenden Ansprüche, wobei die Betätigungsteile (7) so angeordnet sind, dass sie einen Aufnahmeraum (32) für die bereits geschüttelten Zweige bilden.

29. Vorrichtung (1; 20) nach einem der vorhergehenden Ansprüche, wobei die Versteifungseinrichtung für jedes Schüttelelement (5; 50, 51) ein Paar Lager (19A, 19B) aufweist, welche jeden der Betätigungsteile (7) mit dem Hauptgehäuse (2, 3; 21, 3) drehbar verbinden und jeweils im Wesentlichen an einem Ende des Betätigungsteils (7) angeordnet sind.

30. Vorrichtung (1; 20) nach einem der vorhergehenden Ansprüche, die vier Schüttelelemente (5; 50) aufweist.

31. Vorrichtung (1; 20) nach einem der vorhergehenden Ansprüche, wobei jedes der Schüttelelemente (5; 50) an einer Ecke eines Polygons angeordnet ist.

32. Vorrichtung (20) nach einem der vorhergehenden Ansprüche, wobei die mehreren Schüttelelemente wenigstens ein Förderelement (51) und wenigstens ein Schlagelement (50) umfassen, wobei ersteres eine Drehgeschwindigkeit hat, die niedriger ist als die von letzterem, so dass das Förderelement (51) in der Lage ist, das Früchte tragende Blätterwerk zu dem Schlagelement (50) zu fördern.

33. Vorrichtung (20) nach dem vorhergehenden Anspruch, mit mehreren Schlagelementen (50), die das wenigstens eine Förderelement (51) umgeben.

34. Vorrichtung (20) nach dem vorhergehenden Anspruch, mit vier Schlagelementen (50), die das wenigstens eine Förderelement (51) umgeben.

35. Vorrichtung (20) nach Anspruch 32, mit mehreren Förderelementen (51), welche das wenigstens eine Schlagelement (50) umgeben.

36. Vorrichtung (20) nach dem vorhergehenden Anspruch, mit vier Förderelementen (51), welche das wenigstens eine Schlagelement (50) umgeben.

37. Vorrichtung (20) nach einem der Ansprüche 32 bis 36, mit mehreren Ringen von Schlagelementen (50), welche Förderelemente oder Ringe von Förderelementen (51) umgeben.

38. Vorrichtung (20) nach einem der Ansprüche 32 bis 37, mit mehreren Ringen von Förderelementen (51), welche Schlagelemente oder Ringe von Schlagelementen (50) umgeben.

39. Vorrichtung (20) nach einem der Ansprüche 32 bis 38, wobei sich das Schlagelement oder die Schlagelemente (50) in einer Richtung drehen, die zu der eines benachbarten Förderelements oder der von benachbarten Förderelementen (51) entgegengesetzt ist.

## Revendications

1. Dispositif de secouage (1 ; 20) pour la récolte de fruits (200) comme les olives, les noisettes et autres fruits semblables des arbres correspondants, comprenant :
- un corps principal (2, 3 ; 21, 3) ;
- un moyen d'entraînement rotatif; et
- une pluralité d'éléments de secouage (5 ; 50, 51) faisant saillie dudit corps principal (2, 3 ; 21, 3), lesdits éléments de secouage (5 ; 50, 51) étant sensiblement en forme de tige et tournant autour des axes de rotation respectifs (A-A) sensiblement parallèles entre eux sous l'action dudit moyen d'entraînement, dans lequel chacun desdits éléments de secouage (5 ; 50, 51) possède à son tour :
- une partie de secouage efficace (6), sensiblement excentrique par rapport à l'axe de rotation respectif (A-A) ; et
- une partie d'actionnement (7) qui peut être actionnée par ledit moyen d'entraînement, qui est essentiellement centrée par rapport audit axe de rotation respectif (A-A) et peut augmenter la profondeur de pénétration de l'élément de secouage (5) lui-même,
**caractérisé en ce que** ledit dispositif (1) comprend en outre des moyens de renforcement (30, 31, 19A, 19B) agencés au niveau de ladite partie d'actionnement (7) de chaque élément de secouage (5) et qui peuvent empêcher les déformations élastiques desdits éléments de secouage (5) lors de leur mouvement rotatif.

2. Dispositif (1 ; 20) selon la revendication 1, comprenant un moyen de transmission de mouvement (4) interposé entre ledit moyen d'entraînement et lesdites parties d'actionnement (7) desdits éléments de secouage (5 ; 50, 51).

3. Dispositif (1 ; 20) selon la revendication précédente, dans lequel ledit moyen de transmission (4) est logé dans ledit corps principal (2, 3 ; 21, 3).

4. Dispositif (1 ; 20) selon la revendication 2 ou 3, dans lequel ledit moyen de transmission comprend des engrenages (4), chacun associé à une partie d'actionnement respective (7) afin d'entraîner en rotation un élément de secouage respectif (5 ; 50, 51).

5. Dispositif (1 ; 20) selon la revendication précédente, dans lequel lesdits engrenages (4) forment un système d'engrenages dentés engrenés afin de synchroniser la rotation desdits éléments de secouage (5 ; 50, 51).

6. Dispositif (1 ; 20) selon l'une quelconque des revendications précédentes, dans lequel l'agencement dans son ensemble est tel que lesdits éléments de secouage (5) peuvent tourner dans le même sens.

7. Dispositif (1 ; 20) selon l'une quelconque des revendications précédentes, dans lequel l'agencement dans son ensemble est tel que lesdits éléments de secouage (5) peuvent tourner dans un sens contraire les un par rapport aux autres.

8. Dispositif (1 ; 20) selon l'une quelconque des revendications précédentes, dans lequel lesdits éléments de secouage (5 ; 50, 51) peuvent être activés de manière sélective par un opérateur (100).

9. Dispositif (1 ; 20) selon l'une quelconque des revendications précédentes, comprenant un moyen pour ajuster la vitesse de rotation desdits éléments de secouage (5 ; 50, 51).

10. Dispositif (1 ; 20) selon l'une quelconque des revendications précédentes, dans lequel ledit moyen d'entraînement est électrique.

11. Dispositif (1 ; 20) selon l'une quelconque des revendications précédentes, dans lequel ledit moyen d'entraînement (4) est logé dans ledit corps principal (2, 3 ; 21, 3).

12. Dispositif (1 ; 20) selon l'une quelconque des revendications précédentes, comprenant une poignée (9) obtenue sur ledit corps principal (2, 3 ; 21, 3).

13. Dispositif (1 ; 20) selon l'une quelconque des revendications précédentes, comprenant un moyen de connexion (10) pour la connexion à une rallonge de tige (11), agencée au niveau dudit corps principal (2, 3 ; 21, 3).

14. Dispositif (1 ; 20) selon la revendication précédente, dans laquelle ledit moyen de connexion (10) a une inclinaison variable.

15. Dispositif (1 ; 20) selon la revendication 13 ou 14, dans lequel ledit moyen de connexion comprend une monture creuse (10), qui peut recevoir une extrémité de ladite rallonge de tige (11).

16. Dispositif (1 ; 20) selon l'une quelconque des revendications 13 à 15, comprenant ladite rallonge de tige (11), dans lequel ladite tige (11) est télescopique.

17. Dispositif (1 ; 20) selon l'une quelconque des revendications précédentes, comprenant une unité d'alimentation rechargeable (13) dudit moyen d'entraînement rotatif.

18. Dispositif (1) selon l'une quelconque des revendications précédentes, comprenant une unité d'alimentation portable (13) pour ledit moyen d'entraînement rotatif.

19. Dispositif (1 ; 20) selon la revendication précédente, dans lequel ladite unité d'alimentation (13) peut être disposée dans un sac que peut transporter l'opérateur (100).

20. Dispositif (1 ; 20) selon l'une quelconque des revendications précédentes, dans lequel ledit moyen de renforcement comprend, pour chaque partie d'actionnement (7) desdits éléments de secouage (5 ; 50, 51), au moins un élément de renforcement (30, 31) circonscrit à ces dernières.

21. Dispositif (1 ; 20) selon l'une quelconque des revendications précédentes, dans lequel ledit moyen de renforcement comprend, pour chaque partie d'actionnement (7) desdits éléments de secouage (5 ; 50, 51), au moins un élément de renforcement (30) fixé audit corps principal (2, 3 ; 21, 3).

22. dispositif (1 ; 20) selon la revendication précédente, dans lequel ledit élément de renforcement comprend un manchon (30) faisant saillie depuis le corps principal (2, 3 ; 21, 3).

23. Dispositif (1 ; 20) selon la revendication précédente, dans lequel ledit manchon (30) est essentiellement cylindrique.

24. Dispositif (1 ; 20) selon la revendication 22, dans lequel ledit manchon (30) est essentiellement tronconique.

25. Dispositif (1 ; 20) selon l'une quelconque des revendications précédentes, dans lequel ledit moyen de renforcement comprend, pour chaque partie d'actionnement (7) desdits éléments de secouage (5 ; 50, 51), au moins un élément de renforcement (31) pouvant être en rotation solidaire avec la partie d'actionnement (7) elle-même.

26. Dispositif (1 ; 20) selon la revendication précédente et selon l'une quelconque des revendications 21 à 24, dans lequel ledit moyen de renforcement comprend, pour chaque partie d'actionnement (7) desdits éléments de secouage (5 ; 50, 51), au moins un premier élément de renforcement (30) fixé audit corps principal (2, 3 ; 21, 3) et au moins un second élément de renforcement (31) pouvant être en rotation solidaire avec la partie d'actionnement (7) elle-même, ledit premier élément (30) étant circonscrit audit second élément (31).

27. Dispositif (1 ; 20) selon la revendication 25 ou 26, dans lequel l'élément de renforcement rotatif comprend un manchon tubulaire (31) qui enveloppe la partie d'actionnement respective (7).

28. Dispositif (1 ; 20) selon l'une quelconque des revendications précédentes, dans lequel lesdites parties d'actionnement (7) sont disposées afin de définir un logement (32) pour les branches déjà secouées.

29. Dispositif (1 ; 20) selon l'une quelconque des revendications précédentes, dans lequel ledit moyen de renforcement comprend, pour chaque élément de secouage (5 ; 50, 51), un paire de paliers (19A, 19B), connectant de manière rotative chacune desdites parties d'actionnement audit corps principal (2, 3 ; 21, 3), chacun disposé essentiellement au niveau d'une extrémité respective de ladite partie d'actionnement (7).

30. Dispositif (1 ; 20) selon l'une quelconque des revendications précédentes, comprenant quatre éléments de secouage (5 ; 50).

31. Dispositif (1 ; 20) selon l'une quelconque des revendications précédentes, dans lequel chacun desdits éléments de secouage (5 ; 50) est disposé au niveau d'un sommet respectif du polygone.

32. Dispositif (20) selon l'une quelconque des revendications précédentes, dans lequel ladite pluralité d'éléments de secouage comprend au moins un élément de transport (51) et au moins un élément de battage (50), le premier possédant une vitesse de rotation inférieure à celle du dernier, de sorte que ledit élément de transport (51) peut transporter le feuillage qui porte les fruits vers ledit élément de battage (50).

33. Dispositif (20) selon la revendication précédente, comprenant une pluralité d'éléments de battage (50) circonscrits audit au moins un élément de transport (51).

34. Dispositif (20) selon la revendication précédente, comprenant quatre éléments de battage (50) circonscrits audit au moins un élément de transport (51).

35. Dispositif (20) selon la revendication 32, comprenant une pluralité d'éléments de transport (51) circonscrits audit au moins un élément de battage (50).

36. Dispositif (20) selon la revendication précédente, comprenant quatre éléments de transport (51) circonscrits audit au moins un élément de battage (50).

37. Dispositif (20) selon l'une quelconque des revendications 32 à 36, comprenant une pluralité de bagues d'éléments de battage (50) circonscrits aux éléments ou bagues des éléments de transport (51) respectifs.

38. Dispositif (20) selon l'une quelconque des revendications 32 à 37, comprenant une pluralité de bagues d'éléments de transport (51) circonscrits aux éléments ou bagues des éléments de battage (50) respectifs.

39. Dispositif (20) selon l'une quelconque des revendications 32 à 38, dans lequel ledit ou lesdits éléments de battage (50) tournent dans un sens opposé à un ou des éléments de transport (51) adjacents respectifs.
